# EUROPÄISCHE PATENTANMELDUNG

(11) **EP 0 875 885 A2**
(43) Veröffentlichungstag der Anmeldung: **04.11.1998**
(21) Anmeldenummer: 98105171.7
(22) Anmeldetag: 21.03.1998
(51) Int. Cl.: G10L 5/06

(54) **Verfahren und Anordnung zur besseren Auslastung der Leistungsfähigkeit des Spracherkenners eines sprachgesteuerten Kommunikationsendgerät**

(30) Priorität: 29.04.1997 DE 19718007
(71) Anmelder: Deutsche Telekom AG, 53113 Bonn (DE)
(72) Erfinder: Lochschmidt, Bernd, Dr.-Ing., 64395 Brensbach (DE); Naumburger, Volkmar, Dr., 15537 Erkner (DE); Rossmy, Walter, Dipl.-Ing., 13125 Berlin (DE); Zimmer, Hellmar, Dr., 12587 Berlin (DE); Seidelmann, Constanze, Dipl.-Ing., 64319 Pfungstadt (DE)

(57) **Zusammenfassung**

Die erfindungsgemäße Lösung ist auf die Erhöhung der Leistungsfähigkeit eines sprecherabhängigen Spracherkenners (2) in Bezug auf die Anzahl der maximal möglichen Einträge im Referenzspeicher ausgerichtet.

Erfindungsgemäß werden einem Spracherkenner (2) mindestens zwei berechtigte Benutzer zugeordnet. Dabei hat jeder der Benutzer über den Spracherkenner (2) Zugriff auf mindestens einen ihm individuell zugeordneten Speicherbereich für ein Telefonbuch (5; 6), so daß bei Aktivierung der Spracherkennung jedem der Benutzer die volle Leistungsfähigkeit des Spracherkenners (2) für die sprachgesteuerte Anwahl einer Gegenstelle zur Verfügung steht.

Die erfindungsgemäße Lösung eignet sich insbesondere für sprachgesteuerte Kommunikationsendgeräte, auf die mehrere Benutzer Zugriff haben müssen, wie z. B. im familiären Umfeld.

## Beschreibung

Die Erfindung betrifft eine Anordnung und ein Verfahren zur besseren Auslastung des Spracherkenners eines Telekommunikationsendgerätes mit Telefonverzeichnis zum sprachgesteuerten Aufbau von Kommunikationsverbindungen.

Neben den bekannten technischen Lösungen für Telekomunikationsendgeräte, die über eine Tastatur bedient werden und deren Rückmeldungen ggf. über ein Display erfolgen, existiert eine andere Gruppe bekannter technischer Lösungen, die auf der Gerätesteuerung mit sprachlichen Mitteln basieren. Die zur ersten Gruppe gehörenden Endgeräte erfordern zu ihrer Bedienung, wie beispielsweise zum Verbindungsaufbau, die numerische Eingabe der gewünschten Rufnummer über eine Tastatur. Dies setzt immer eine Zuordnung von gewünschtem Teilnehmer und assoziierter Rufnummer voraus. In einfachen Telekommunikationsendgeräten ist diese Zuordnung durch den Nutzer bei jedem Verbindungsaufbau neu aus dem Gedächtnis zu reproduzieren. Bei moderneren Endgeräten wird der Name des gewünschten Teilnehmers in alphabetischer Form in ein Speichermedium eingegeben, wobei die Assoziation zur Rufnummer im Kommunikationsendgerät gespeichert ist. In jedem Fall ist der Bedienaufwand hoch. Diese Mängel können durch die Gruppe der sprachgesteuerten Kommunikationsendgeräte umgangen werden, indem die Namen der gewünschten Teilnehmer in ein Mikrofon des Kommunikationsendgerätes als Sprachinformation eingegeben werden. Zu diesem Zweck müssen in einer vorbereitenden Trainingssitzung alle Namen, die später per Namenwahl angesprochen werden sollen, durch mehrfaches Vorsprechen dem sprecherabhängigen Spracherkenner angelernt werden (teach in). Während der Trainingssitzung werden auch die den Namen assoziierten Rufnummern eingegeben und gespeichert. Hierbei ist es ohne Bedeutung, ob die Eingabe der Rufnummer per Tastatur oder per Spracherkennung erfolgt.

Gemäß Stand der Technik verfügen Telekommunikationsendgeräte mit Sprachsteuerung über einen Speicher, in dem das Referenzwissen der trainierten Namen gespeichert ist. Aus Gründen der begrenzten Erkennungssicherheit der heute gebräuchlichen sprecherabhängigen Spracherkenner und der unzureichenden Unterscheidbarkeit vieler Namen, ist die Größe der Telefonbücher für Namenwahl auf 50 bis 100 Einträge beschränkt. Dieser Sachverhalt bewirkt eine ungünstige Relation in Bezug auf das Preis/Leistungs-Verhältnis eines derart konfigurierten Kommunikationsendgerätes, wenn es z. B. im familiären Umfeld oder in einer Umgebung eingesetzt wird, die erfordert, daß mehrere Nutzer auf ein Kommunikationsendgerät zugreifen. Da die Leistungsfähigkeit eines sprecherabhängigen Spracherkenners auf die Anzahl der maximalen Einträge im Referenzspeicher beschränkt ist, würde bei einer maximal möglichen Anzahl von beispielsweise 60 Einträgen und drei verschiedenen Benutzern, jedem Benutzer nur noch eine Anzahl von maximal 20 Einträgen für die Namenwahl zur Verfügung stehen.

Die erfindungsgemäße Lösung ist auf ein sprachgesteuertes Telekommunikationsendgerät ausgerichtet, bei dem die o. g. Nachteile des Standes der Technik beseitigt werden.

Der erfindungsgemäßen Lösung liegt das Prinzip zugrunde, ein sprachgesteuertes Telekommunikationsendgerät mit individuellen Telefonverzeichnissen zur Namenwahl auszurüsten.

Die erfindungsgemäße Lösung beruht darauf, daß einem sprecherabhängigen Spracherkenner mehrere, mindestens jedoch zwei einzeln ansteuerbare Referenzspeicher, die als Telefonbücher ausgebildet sind, zugeordnet werden. Jedes Telefonbuch wird über den Spracherkenner einzeln angesteuert. Dabei ist die jedem Telefonbuch zugeordnete Anzahl von Einträgen entsprechend der Leistungsfähigkeit des Spracherkenners bemessen. Ordnet man beispielsweise das erste Telefonbuch einem ersten Benutzer und das zweite Telefonbuch einem zweiten Benutzer zu, so kann auf diese Weise jeder Benutzer über die volle Leistungsfähigkeit des Spracherkenners verfügen. Jeder Benutzer verfügt damit über ein an die maximale Leistungsfähigkeit des Spracherkenners angepaßtes individuelles Telefonbuch mit seinem individuellen Referenzmuster für die sprachgesteuerte Namenwahl einer Gegenstelle.

Das gleiche Verfahren kann aber auch dazu benutzt werden, die Anzahl der maximal möglichen Einträge zu vergrößern, indem einem Benutzer beispielsweise zwei Telefonbücher zugeordnet werden. Bei einer derartigen Lösung wird jedem Telefonbuch ein definierter Kreis von Rufnummern zugeordnet. In diesem Fall ist es zweckmäßig, die Telefonbücher nach Sachgebieten zu strukturieren. So kann beispielsweise eine Unterteilung in ein privates Telefonbuch und in ein dienstliches Telefonbuch vorgenommen werden.

Die erfindungsgemäße Anordnung wird nachfolgend an einem Ausführungsbeispiel mit zwei als Refenzspeicher konfigurierten Telefonbüchern 5 und 6 erläutert. Die zugehörige Zeichnung zeigt anhand einer Blockschaltung die erfindungsgemäße Anordnung.

Erfindungsgemäß ist das Mikrofon 1 des Kommunikationsendgerätes mit einem Spracherkenner 2 verbunden. Am Spracherkenner 2 sind eine Baugruppe Ablaufsteuerung 9 und eine Baugruppe Referenzwissen für Telefonbuchbezeichnung 4 angeschaltet. Der Spracherkenner 2 ist weiterhin über Sprachpromts 7 mit dem Lautsprecher 8 und über einen Verzweiger 3 mit mindestens zwei voneinander unabhängigen Speicherbaugruppen erstes Telefonbuch 5 und zweites Telefonbuch 6 verbunden. Die Speicherbaugruppen erstes Telefonbuch 5 und zweites Telefonbuch 6 besitzen eine Rückverbindung zum Spracherkenner 2. Die Zifferntastatur 10 ist mit dem Verzweiger 3, dem Display 11 und den Sprachpromts 7 verbunden.

Damit individuelle Telefonverzeichnisse wie ein erstes Telefonbuch 5 und ein zweites Telefonbuch 6 individuell angesteuert und benutzt werden können, ist eine eindeutige Zuordnung über das Kommunikationsendgerät notwendig. Dies betrifft sowohl die Trainigsphase als auch die spätere Nutzung. Hierfür bieten sich erfindungsgemäß unterschiedliche Wege an: Der einfachste Weg besteht darin, den Verzweiger 3, über den die einzelnen Telefonbücher 5; 6 angesteuert werden, als manuell betätigbaren Wahlschalter zu konfigurieren. In einer bestimmten Stellung des Wahlschalters wird ein bestimmtes Telefonbuch 5; 6 aktiviert.
Der komfortablere Weg benutzt die Spracherkennung nicht nur zur Anwahl des gewünschten Teilnehmers über die Telefonbücher 5; 6, sondern bereits zur Voreinstellung des gewünschten Telefonbuches 5; 6. Zur Aktivierung seines Telefonbuchs 5; 6 meldet sich der Benutzer entweder mit seinem Namen oder mit einem speziell von ihm trainierten Schlüsselwort. Denkbar ist auch, daß für die Zuweisung der Telefonbücher 5; 6 die Identifizierung der einzelnen Benutzer gegenüber dem Spracherkenner 2 über ein vom Endgerätehersteller vorgegebenes Schlüsselwort (z. B. Namensspeicher 1, 2...n) erfolgt. Durch dieses Schlüssel-wort weist sich der Benutzer gegenüber der Spracherkennung 2 aus, wodurch dann das für den Benutzer vorgesehene Telefonbuch 5; 6 aktiviert wird. Diese Aktivierung muß nicht immer vor jeder Namenwahl ausgeführt werden, sondern nur dann, wenn das Kommunikationsendgerät erstmalig benutzt wird oder nach einem Benutzerwechsel.

Nachfolgend wird eine solche Aktivierungsprozedur für die dem Blockschaltbild zugrunde liegende Ausführungsform mit zwei Referenzspeichern erstes Telefonbuch 5 und zweites Telefonbuch 6 näher erläutert.
Vom Mikrofon 1 wird das Sprachsignal auf den Eingang des sprecherabhängigen Spracherkenners 2 geleitet. Wurde das Kommunikationsendgerät noch nicht trainiert, d. h., das Referenzwissen für den Spracherkenner 2 wurde noch nicht erzeugt, wird zunächst durch die Ablaufsteuerung 9 veranlaßt, daß das Training für die Bezeichnung der Telefonbücher vorgenommen wird. Dazu wird der Verzweiger 3 so eingestellt, daß der Speicher für das Referenzwissen der Telefonbuchbezeichnung 4 trainiert wird. Per Sprachpromts 7 und Lautsprecherausgabe 8 oder Display-Anzeige 11 wird der Benutzer zum Sprechen seiner Telefonbuchbezeichnung bzw. seines Schlüsselwortes über das Mikrofon 1 aufgefordert. Dabei wird das Referenzwissen für diese Bezeichnung automatisch vom Spracherkenner 2 ermittelt und im Referenzspeicher Referenzwissen für Telefonbuchbezeichnung 4 abgelegt.

Ist das Training der Telefonbuchbezeichnung erfolgreich abgeschlossen worden, kann der Nutzer mit dem Training der Telefonbucheinträge beginnen. Die Ablaufsteuerung 9 veranlaßt hierzu über den Verzweiger 3 beispielsweise die Voreinstellung des ersten Telefonbuchs 5 und die Erzeugung der Aufforderung zum Namenstraining. Daraufhin spricht der Benutzer den zu trainierenden Namen, der akustisch über das Mikrofon 1 erfaßt wird. Parallel dazu wird über die Zifferntastatur 10 die dazu assoziierte Rufnummer eingegeben. Der Spracherkenner 2 erzeugt das zum gesprochenen Namen gehörende Referenzwissen, das über den Verzweiger 3 gemeinsam mit der Rufnummer und ggf. dem Namen im Klartext dem Referenzspeicher erstes Telefonbuch 5 zuge-wiesen wird. Trainiert ein weiterer Benutzer sein individuelles Telefonbuch, beispielsweise das zweite Telefonbuch 6, so wird auf die gleiche Weise verfahren. Das Referenzwissen wird aber jetzt im zweiten Telefonbuch 6 abgelegt.

Bei der Nutzung der Namenwahl mit Hilfe der Telefonbücher 5; 6 wird zunächst entweder über die Zifferntastatur 10 oder per Spracherkennung 2 das individuelle Telefonbuch 5 bzw. 6 des Nutzers aktiviert. Dies geschieht durch die Erkennung der Bezeichnung des individuellen Telefonbuches 5 bzw. 6. Dazu wird durch die Ablaufsteuerung 9 der Referenzspeicher Referenzwissen für Telefonbuchbezeichnung 4 freigeschaltet. Mit der erfolgreichen Erkennung der Telefonbuchbezeichnung wird über den Verzweiger 3 das zum Benutzer assoziierte Telefonbuch 5 oder 6 aktiviert. Wurde bereits eine solche Aktivierung vorgenommen, erübrigt sich dieser Schritt. Im folgenden kann der Benutzer frei auf sein Telefonbuch 5 oder 6 zugreifen und die Namenseinträge sprachlich aktivieren. Das Erkennungsresultat wird zur Bestätigung entweder am Display 11 angezeigt oder per Sprachpromts 7 über den Lautsprecher 8 hörbar gemacht. Schließlich wird die gefundene Rufnummer zur Wahlausführung gebracht.
Bedient ein anderer berechtigter Benutzer das Endgerät, beginnt die Prozedur wieder bei der Auswahl der Telefonbuchbezeichnung.
Eine Möglichkeit zur Aktivierung des gewünschten Telefonbuchs 6; 6 wird auch darin gesehen, den Verzweiger 3 als manuell betätigbaren Umschalter zu konfigurieren. Diese Lösung wäre eine Variante, die man beispielsweise zur Minimierung von Kosten verwenden könnte. Mittels einer solchen Lösung könnte jeder Benutzer manuell auf das ihm zugeordnete Telefonbuch 5 oder 6 umschalten.

### Aufstellung der verwendeten Bezugszeichen

- 1: Mikrofon
- 2: Spracherkenner
- 3: Verzweiger
- 4: Referenzwissen Telefonbuchbezeichnung
- 5: erstes Telefonbuch
- 6: zweites Telefonbuch
- 7: Sprachpromts
- 8: Lautsprecher
- 9: Ablaufsteuerung
- 10: Ziffern-Tastatur
- 11: Display

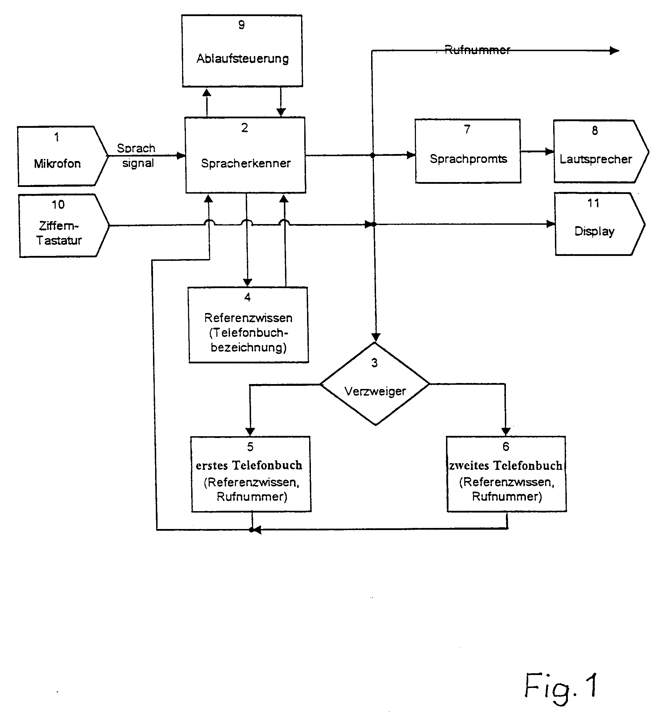

## Patentansprüche

1. Verfahren zur besseren Auslastung der Leistungsfähigkeit des Spracherkenners eines sprachgesteuerten Kommunikationsendgerätes, **dadurch gekennzeichnet**, daß vom Spracherkenner mehrere, mindestens jedoch zwei voneinander unabhängige, sprachgesteuerte Referenzspeicher, die als Telefonbuch ausgebildet sind, einzeln angesteuert werden, wobei die jedem Telefonbuch zugeordnete Anzahl von Einträgen entsprechend der Gesamtleistungsfähigkeit des Spracherkenners bemessen ist, so daß jedem berechtigten Benutzer zu dem jeweils von ihm aktivierten Telefonbuch die volle Leistungsfähigkeit des Spracherkenners für die sprachgesteuerte Anwahl einer gewünschten Gegenstelle zur Verfügung steht.

2. Verfahren nach Anspruch 1, dadurch gekennzeichnet, daß die Zugriffsberechtigung der berechtigten Benutzer zu den Telefonbüchern (5; 6) anhand der individuellen Referenzmuster der Benutzer geprüft wird, und daß bei Erkennung eines berechtigten Benutzers anhand seines individuellen Referenzmusters das für diesen Benutzer vorgesehene Telefonbuch (5; 6) aktiviert und freigegeben wird.

3. Verfahren nach Anspruch 1, dadurch gekennzeichnet, daß die Zugriffsberechtigung der berechtigten Benutzer zu den Telefonbüchern (5; 6) anhand eines für jedes Telefonbuch (5; 6) individuell festgelegten Schlüsselwortes des berechtigten Benutzers geprüft wird, und daß bei Erkennung eines berechtigten Benutzers anhand seines Schlüsselwortes das für diesen Benutzer vorgesehene Telefonbuch (5; 6) aktiviert und freigegeben wird.

4. Verfahren nach Anspruch 1, dadurch gekennzeichnet, daß mindestens zwei Telefonbücher (5; 6) einem Benutzer zugeordnet werden, wobei jedes Telefonbuch (5; 6) einzeln über ein individuelles Schlüsselwort angesteuert und freigegeben wird.

5. Anordnung zur besseren Auslastung der Leistungsfähigkeit des Spracherkenners (2) eines sprachgesteuerten Kommunikationsendgerätes, **dadurch gekennzeichnet**, daß das Mikrofon (1) des Kommunikationsendgerätes mit einem Spracherkenner (2) verbunden ist, an welchen eine Baugruppe Ablaufsteuerung (9) und eine Baugruppe Referenzwissen für Telefonbuchbezeichnung (4) angeschaltet ist, daß der Spracherkenner (2) zum einen über Sprachpromts (7) mit dem Lautsprecher (8) und zum anderen über einen Verzweiger (3) mit mindestens zwei voneinander unabhängigen Referenzspeichern erstes Telefonbuch (5) und zweites Telefonbuch (6) verbunden ist, daß die Referenzspeicher erstes Telefonbuch (5) und zweites Telefonbuch (6) eine Rückverbindung zum Spracherkenner (2) besitzen, und daß die Ziffern-Tastatur (10) mit dem Verzweiger (3), dem Display (11) und den Sprachpromts (7) verbunden ist.

6. Anordnung nach Anspruch 5, dadurch gekennzeichnet, daß der Verzweiger (3) als ein manuell betätigbares Umschaltelement ausgebildet ist.
